# EUROPEAN PATENT SPECIFICATION

(11) **EP 2 315 663 B1**
(45) Date of publication and mention of the grant of the patent: **23.09.2020**
(21) Application number: 09807143.4
(22) Date of filing: 11.08.2009
(51) Int. Cl.: C09J 7/28, C09J 7/29, B32B 37/12, B32B 7/12, B32B 15/08, B32B 15/20, B32B 27/28, B32B 27/34, B32B 27/36, B32B 27/40, B32B 27/42, B32B 3/08

(54) **ADHESIVES COMPATIBLE WITH CORROSION SENSITIVE LAYERS**
MIT KORROSIONSEMPFINDLICHEN SCHICHTEN KOMPATIBLE KLEBSTOFFE
ADHÉSIFS COMPATIBLES AVEC DES COUCHES SENSIBLES À LA CORROSION

(30) Priority: 12.08.2008 US 88201 P
(43) Date of publication of application: 04.05.2011
(73) Proprietor: 3M Innovative Properties Company, St. Paul, MN 55133-3427 (US)
(72) Inventor: EVERAERTS, Albert, I., Saint Paul, MN 55133-3427 (US); XIA, Jianhui, Saint Paul, MN 55133-3427 (US)
(74) Representative: Vossius & Partner Patentanwälte Rechtsanwälte mbB
(86) International application number: PCT/US2009/053337
(87) International publication number: WO 2010/019528

(56) References cited:
- WO-A1-97/31078
- WO-A1-2008/058703
- JP-A- 2005 314 476
- US-A1- 2002 146 568
- US-A1- 2005 142 342
- US-A1- 2006 046 067
- US-B2- 7 255 911

## Description

### Background

Adhesives find wide applications in optical displays. Such applications include, but are not limited to, bonding polarizers to modules of a liquid crystal display (LCD) and attaching various optical films to a glass lens in mobile hand held devices (MHH). The polarizers may be in direct or indirect contact with the adhesive.

Recently, there has been an upward trend to introduce and combine touch panel functions in various display applications. Touch panels typically include a corrosion sensitive layer, such as a layer of indium-tin oxide, coated polyethylene terephtalate film or coated on glass. These coated substrates are often attached to the display modules using adhesives. In some touch panel designs, the adhesive contacts the corrosion sensitive layer. In other display applications, the adhesive may also contact corrosion sensitive layers such as vapor coated mirror surfaces or electro-magnetic interference shielding layers. These layers are also frequently derived from metals and metal alloys that are electro-conductive.

JP 2005-314476 A describes an adhesive composition, adhesive sheet and surface-protective film.

### Summary

The present disclosure addresses the need for an adhesive that is compatible with a corrosion sensitive layer, such as a metal or metal alloy. That is, the adhesive only minimally changes the resistance of such layer once in contact with it. In this disclosure, the following definitions are used:
"a change" as used to describe the electrical resistance that the corrosion sensitive layer exhibits means generally an absolute value difference in electrical resistance of the layer as before and after conditioning;
"acid number" generally denotes the acid content of the polymer and is defined as the amount of potassium hydroxide (typically in milligrams) that is needed to neutralize the acids in one gram of polymer, generally following ASTM D974;
"addition cure silicone" generally involves a reaction of a vinyl terminated oligomer/polymer, such as a vinyl terminated polydimethylsiloxane (PDMS), with a hydride containing oligomer/polymer, such as a PDMS containing a silicon hydride, typically in the presence of a platinum catalyst;
"adhesive" generally means a viscoelastic material having viscous and elastic components such that while the adhesive displays some level of resiliency under compressive stress, it is generally not a spring-like material, i.e., it is not an elastic solid;
"corrosion sensitive layer" means generally a layer that is susceptible to oxidation upon exposure to air and moisture, and the layer is capable of carrying a current once a voltage is applied to it;
"cure-in-place adhesive" generally means a liquid system that can be delivered to a desired location where the adhesive components either nearly spontaneously react with each other or do so when exposed to an energy source (such as heat or radiation);
"heat activated adhesive" generally means an adhesive that exhibits substantially no tack in dry form using finger pressure at room temperature but with exposure to elevated temperatures, the adhesive is tacky, wets out the substrate surfaces well, and after cooling to room temperature, adheres to a variety of dissimilar surfaces;
"microstructure" as used to describe any generic layer or substrate generally means one that contains repeating structures projecting from a major surface of the layer, the structures can be in a variety of form, including but not limited to, peaks and pyramids;
"optically clear" generally means that a material exhibits about 5% or less haze, as measured on a 25 micrometer thick sample in the manner described below in the Example section; and
"pressure sensitive adhesive" generally means that the adhesive is aggressively and permanently tacky in dry form at room temperature and firmly adheres to a variety of dissimilar surfaces.

In one aspect, the present disclosure pertains to an article comprising an optically clear adhesive having an acid number of less than 5 and selected from the group consisting of polyurea, polyamide, polyurethane, polyester, addition cure silicone and combinations thereof in contact with a corrosion sensitive layer selected from the group of metal and metal alloys, wherein when the article is conditioned for 21 days at 60°C and 90% relative humidity, the corrosion sensitive layer exhibits a change from its initial electrical resistance value of 20% or less; wherein the adhesive is a pressure-sensitive adhesive or a cure-in-place adhesive. In one embodiment, the adhesive and corrosion sensitive layer are disposed on a first major surface of a substrate such that the corrosion sensitive layer and optionally the adhesive are in contact with the first major surface of the substrate.

In another aspect, the present disclosure pertains to a method of making an article comprising the steps of: (i) providing a substrate having a corrosion sensitive layer disposed on at least a portion thereof; (ii) providing a tape comprising (a) a backing having opposing first and second major surfaces, (b) an adhesive having an acid number of less than about 5 and selected from the group consisting of polyurea, polyamide, polyurethane, polyester, addition cure silicone and combinations thereof; and (iii) laminating the tape to the substrate such that the adhesive contacts the corrosion sensitive layer. The corrosion sensitive layers disclosed herein are substantially flat; i.e., they do not contain microstructures. In other embodiments, the backing, if a tape is used, or the substrate is substantially flat.

In one exemplary application, the articles and the method of making the articles described in the present disclosure can be integrated into electronic devices such as, but not limited to, liquid crystal display panel, capacitive type touch panels, cell phones, hand held devices, and a laptop computers.

Other features and advantages will be apparent from the following detailed description and the claims. The above summary is not intended to describe each illustrated embodiment or every implementation of the present disclosure. The detailed description that follows more particularly exemplifies certain presently preferred embodiments using the principles disclosed herein.

### Brief Description of the Drawings

The invention can be better described with reference to the drawings, wherein:
Figure **1** is a top plan view of an exemplary article according to the present disclosure;
Figure **2** is a cross-sectional view of another exemplary article according to the present disclosure;
Figure **3** is a schematic view of an exemplary method of making an article according to the present disclosure;
Figures **4A** and **4B** are schematic views of another exemplary method of making an article according to the present disclosure;
Figure **5** is a cross-sectional view of another exemplary article according to the present disclosure; and
Figure **6** shows the relationship of the resistance change as a function of time for Examples 1 to 5 and a Control sample during various stages of conditioning.

The figures are idealized, are not drawn to scale, and are intended only for illustrative purposes.

### Detailed Description

All parts recited herein are by weight unless otherwise indicated.

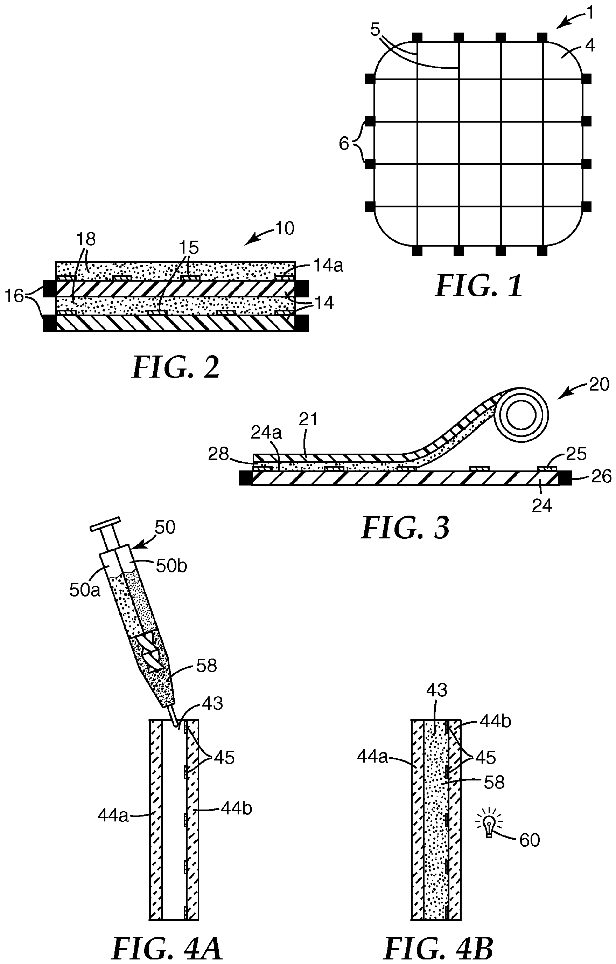

Turning now to the figures, Figure **1** shows a top plan view of an article **1** that can be used in electronic devices. The article includes a substrate **4** having a plurality of corrosion sensitive traces **5,** in the form of a grid, disposed on a first major surface of the substrate. A connector pad **6** lies adjacent to each end of the corrosion sensitive trace. When a current is applied to the connector pads, they are in electrical communication with the corrosion sensitive traces. The adhesive disclosed herein will typically be applied to the substrate such that it is in direct contact with the corrosion sensitive layer and the first major surface of the substrate.

Figure **2** depicts a cross-sectional view of an exemplary article **10** having a plurality of alternating layers of adhesive **18** and substrate **14** having a corrosion sensitive layer **15** disposed on a first surface **14a** of the substrate. Connector pads **16** lie adjacent to the edge of the substrate. The connector pads are in communication with the corrosion sensitive layer such that the pads and the corrosion sensitive layers are in electrical communication with one another when current passes through the layer **15.** While only two sets of alternating layers of the substrate and adhesive are shown, it is within the scope of the present disclosure to use a higher number of alternating layers or to use one set of substrate and adhesive.

Figure **3** depicts a schematic view of an exemplary process of making an article. The process includes a step of providing a first substrate **24** having a non-continuous corrosion sensitive layer **25** disposed on first surface **24a** of the substrate. Connector pads **26** lie adjacent to the substrate, as in Figure **1****.** A roll of tape **20** has an adhesive **28** coated on a backing **21.** Optionally, the backing includes release coatings allowing for the roll of tape to unwind. The tape is laminated to the first surface **24a** of the first substrate **24** such that the adhesive **28** is in contact with the corrosion sensitive layer and the exposed portion of the first surface **24a** i.e., that portion that is not covered by the corrosion sensitive layer. In one embodiment, the backing **21** functions as a second substrate and becomes a part of the article. In another embodiment, the backing can be removed and discarded and a second substrate can be laminated on to the now exposed surface of the adhesive **28.** While Figure **3** depicts the use of a roll of tape, the method can also be practiced using cut sheets of tapes.

Figures **4A** and **4B** depict schematic views of another exemplary process of making an article according to the present disclosure. The process includes a step of providing a cavity **43** formed by first and second substrates **44a** and **44b,** which may be substantially coplanar with one another. A corrosion sensitive layer **45** is disposed on at least one of the first and second substrate. An electrical connector pad **46** lies adjacent to one of the two substrates and is in communication with the corrosion sensitive layer. For illustrative purposes, the corrosion sensitive layer is shown to be disposed on the second substrate, **44b.** A delivery mechanism, such as a multi-chamber syringe **50** includes a first chamber **50a** and a second chamber **50b** where the components of the adhesive are stored separately. In use, one can depress a plunger in the syringe and the components will mix in a third chamber where a mixer is housed and the adhesive composition **58** can be mixed. In this way, the components can be stored under stable conditions until it is ready for use. In Figure **4b****,** the adhesive composition **58** has been mixed in and dispensed from the syringe and fills the cavity. After mixing, the components may be sufficiently reactive for them to polymerize and yield the final adhesive. Optionally an energy source **60,** such as heat from an oven or an infrared light source can be used to cure the adhesive composition. This particular method has the advantage in that the adhesive composition, while in liquid form, can better accommodate non-uniform thickness between the first and second substrate and where the substrates are rough. This method is particularly suited for the situation where the first and second substrates are glass or a transparent substantially rigid polymeric material.

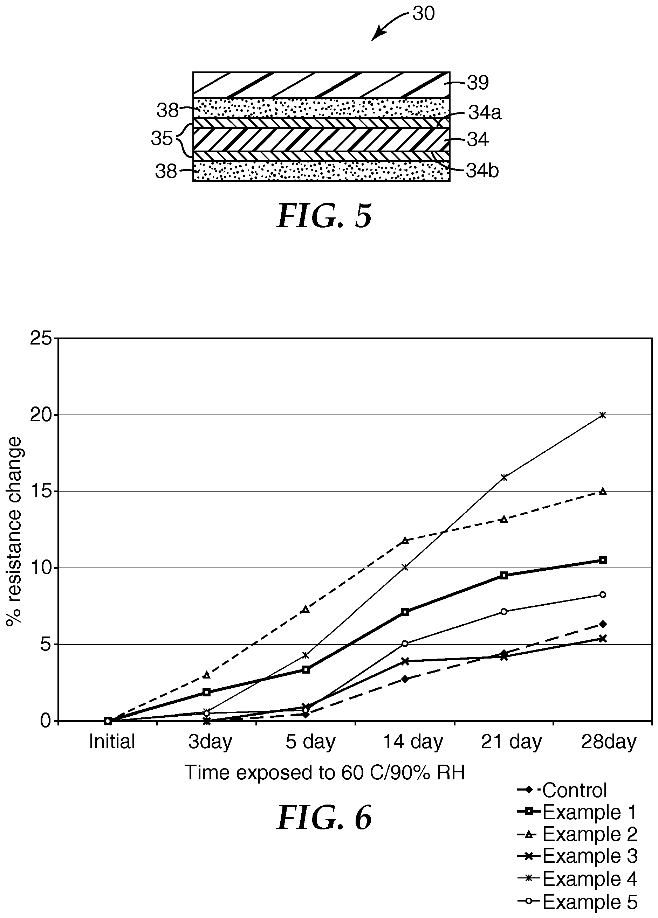

Figure **5** shows a cross-sectional view of a multi-layer article **30.** The article includes a center substrate **34** having opposing first and second major surfaces, **34a** and **34b** respectively. On each of the first and second surfaces lies a corrosion sensitive electro-conductive layer **35.** While Figure **5** shows two continuous layers **35,** it is within the scope of the present disclosure to have only one layer **35** and the layer can be discontinuous. Optionally, an electrical connector pad (not shown) is attached to the substrate and the pad may be in communication with the layer **35.** Covering the layers **35** are two adhesive layers **38.** And, if desired, the adhesive layers can be covered with a protective liner **39.**

### Adhesive

The adhesives suitable for use in the present disclosure include those that are neutral or basic in nature. In other words, the adhesive preferably does not contain or contains only minor amounts of acid functionality, such that the adhesive has an acid number of less than 5. The acid content in the adhesive does not appreciably interfere with the electrical performance of the corrosion sensitive layer over the life span of the article. The adhesive used in the present disclosure is a pressure sensitive adhesive (PSA), or a cure-in-place adhesive (CIPA). The adhesive is optically clear. Thus, the adhesive can be one of the following: an optically clear PSA or an optically clear CIPA.

Exemplary adhesives include polyurea, polyamide, polyurethane, polyester, addition cure silicone and combinations thereof. The adhesive has an acid number less than 5, preferably less than 3, and more preferably less than 1. The polymers disclosed herein are typically derived from polyols or polyamines that are chain-extended with multifunctional isocyanates (to make the polyurethanes, polyureas or their combinations) or multifunctional esters (to make the polyamides, polyesters, or their combinations). Polyamides may also be derived from cyclic amides (lactams) by ring opening polymerization, but chain-extension is preferred for easy introduction of other segments. Polyesters may also be derived from polyols and multifunctional acid chlorides, provided that the acid number of less than 5 is met. The ureas, amides, esters, or urethane groups typically provide the rigid, reinforcing segments of the polymer. Strong hydrogen bonding between these groups provides cohesive strength. In some cases, a short chain extender (typically a low molecular weight polyamine or polyol) can be used to provide additional hard segment. Optionally, the polymer may be terminated with terminal or structo-pendant curing groups, such as for example silanes, acrylates, methacrylates, residual isocyanates, epoxies, and the like. To facilitate the heat activation of the adhesives or to make them inherently tacky, soft segments derived from polyols and polyamines with lower modulus and/or lower T_{g} are typically preferred. Examples of these polyamines or polyols include aminopropyl functional polydimethylsiloxanes, hydroxypropyl functional polydimethylsiloxanes, polybutadiene diol, polyethylenebutylene diol, polyether diols (such as polytetrahydrofuran diol), polyether diamines (such as Jeffamine™), low T_{g} polyesters, and the like. Where desired, the adhesives of this invention may be further formulated with tackifiers, and optional catalysts for the curing groups.

Preferably, the pressure sensitive adhesive has a shear elastic modulus of 3 x 10⁵ Pascal or lower at room temperature and has a glass transition temperature (T_{g}) of about 10°C or lower. A heat-activated adhesive typically has a shear elastic modulus of 5 x 10⁵ Pascal or lower at the temperature of heat-activation and has a T_{g} less than the heat activation temperature. All two types of adhesive, PSA, and CIPA, which are optically clear typically have both an elastic and viscous component in their modulus, i.e., the deformation (strain) of the material is not directly proportional to the applied stress and some viscous dissipation is present. The adhesive can be produced using a solvent-based solution polymerization or using bulk polymerization.

In a solution polymerization, solvent-based adhesive, the components and additives are mixed in an organic solvent, coated from solution, and then dried. When it is desired to solvent coat the adhesive, the reaction may be carried in a suitable solvent (i.e., the solvent does not interfere with the polymerization reaction) or the reaction may be carried out in bulk and the resulting polymer is dissolved in a suitable solvent for coating. Phase separation of hard and soft segments in the polymer change frequently yields a physically crosslinked network. This network provides high cohesive strength to the polymer and coating. In some cases the solvent based adhesive may be additionally crosslinked during the drying process, or in some cases it may be crosslinked after the drying step. Such crosslinkers include thermal or UV crosslinkers, which are activated during or after the drying step of preparing solvent coated adhesives. Radiation induced crosslinking such as electron beam may also be used. In addition, the polymers of the present disclosure may also include one or more curable groups. Examples of these curable groups include silanes or terminal isocyanates which are typically cured by moisture, epoxies and ethylenically unsaturated groups like acrylates, which can be cured with heat or radiation, optionally in the presence of a catalyst or initiator. The solvent-based adhesive may be coated upon suitable flexible backing materials by any known coating technique to produce adhesive coated sheet materials.

In a bulk polymerization, a monomer premix comprising the components of the adhesive are mixed using a static mixer, extruder, or a mechanical mixer to promote the reagents to come into intimate contact with each other. Optionally, a catalyst such as dibutyltindilaurate may also be added to the mixture. Bulk polymerization as described herein lends itself well for producing thick (e.g., 0.127 to 1.016 mm, 0.005 to 0.040 inch) adhesive films for use in rigid-to-rigid lamination applications. For example, such a thick adhesive film can be laminated to a piece of glass or be used to laminate two pieces of glasses together.

In yet another method, the components of the adhesive are mixed with the optional additives (e.g., tackifiers, thermal stabilizers, fillers) and optional crosslinker. The monomer or monomer mixture can be used in a gap-filling application, as in, e.g., filling a space between two substrates such as between two glass substrates. In one application, a syringe is used to deliver the adhesive components into the gap, and the reagent is cured using thermal radiation. Such a method and delivery mechanism is well suited for gaps with varying thicknesses or where the substrates have surfaces that are not substantially flat.

The flexible backing materials may be any materials conventionally used as a tape backing, optical film, release liner or any other flexible material. When the final product application requires adhesive contact with the corrosion sensitive surface but is outside of the optical path, the backing does not have to be optically clear. Typical examples of flexible backing materials used as tape backing that may be useful for the adhesive compositions include those made of plastic films such as polypropylene, polyethylene, polyurethane, polyvinyl chloride, polyester (e.g., polyethylene terephthalate), cellulose acetate, and ethyl cellulose. Some flexible backing may have coatings. For example a release liner may be coated with a low adhesion component, such as silicone. Illustrative coating techniques include roll coating, spray coating, knife coating, die coating, printing, and the like. Solution processing as described herein lends itself well for producing thin e.g. 25 to 75 µm (25 to 75 micron; 0.001 to 0.003 inch) adhesive films for use as transfer tapes. The resulting tape has low volatile residuals after oven drying.

### Examples

These examples are merely for illustrative purposes only and are not meant to be limiting on the scope of the appended claims. All parts, percentages, ratios, etc. in the examples and the rest of the specification are by weight, unless noted otherwise. Solvents and other reagents used were obtained from Sigma-Aldrich Chemical Company; Milwaukee, Wisconsin unless otherwise noted.

### Haze and Transmission Testing

A 25 µm (micron) thick sample of the adhesive was laminated to a 25 µm (micron) thick Melinex® polyester film 454 (from DuPont Company, Wilmington, DE) in a manner so as to assure that no air bubbles are trapped between the film and the adhesive layer. A 75mm by 50 mm plain micro slide (a glass slide from Dow Corning, Midland, MI), that had been wiped three times with isopropanol, was laminated to the adhesive sample using a hand roller to assure no air bubbles were trapped between the adhesive and the glass slide. The percent (%) transmission and haze were measured using a Model 9970 BYK Gardner TCS Plus Spectrophotometer (from BYK Gardner, Columbia, MD). The background measurement was made with a sandwich of the Melinex® polyester film 454 and the glass slide. The % transmission and the haze of the adhesive sample were then obtained directly on the film/adhesive/glass laminate in the spectrophotometer.

Each of the adhesives of Examples 1 to 5 had an optical transmission value greater than 90% and a haze value below 5%.

### ITO Compatibility Study of Corrosion Sensitive Layer

The compatibility of the adhesive with the corrosion sensitive layer, which was a layer of indium-tin-oxide (ITO), was done as follows. A sample of the adhesive was transferred to a 0.0381 mm (0.0015 inch)thick primed polyester (PET) backing to form a tape. The tape was then laminated to a PET film having a major surface coated with ITO layer such that the adhesive was in direct contact with the traces to from a laminate. An initial surface resistance was measured on the ITO trace using an ohm meter where electrical leads of the meter are placed across the connector pads. The resulting laminate was conditioned in an oven set at 60°C and 90% relative humidity. The surface resistance for each sample was measured periodically over a period of 28 days using an ohm meter. An average of five surface resistance measurements was recorded.

A control sample included an ITO trace exposed to ambient conditions, i.e., no adhesive was laminated onto the PET substrate having the ITO containing trace.

### Compatibility Testing with Other Corrosion Sensitive Surfaces

The compatibility of the adhesive with the corrosion sensitive material, which was a nickel or aluminum vapor metallized PET, was done as follows. A sample of the adhesive was transferred to a 0.0381 mm (0.0015 inch)thick primed polyester (PET) backing to form a tape. The tape was then laminated to the metallized PET film such that the adhesive was in direct contact with the nickel or aluminum. Initial light transmittance and Delta(E) of the laminates were measured using a Model 9970 BYK Gardner TCS Plus Spectrophotometer (from BYK Gardner, Columbia, MD). The resulting laminate was conditioned in an oven set at 60°C and 90% relative humidity and the light transmittance and Delta(E) for each sample were measured periodically over a period of 25 days. Delta(E) is used to describe (mathematically) the distance between two colors. It is defined as the square-root of the sum of (L₁-L₂)², (a₁-a₂)², and (b₁-b₂)², where L, a, and b are color indexes.

### Example 1

Into a reactor was charged 800 grams Jeffamine® D-2000 polyetheramine (from Huntsman Corp., The Woodlands, Texas), 800 grams isopropanol, 22.35 grams Dytek® A diamine (from DuPont, Wilmington, Delaware), and 151.36 grams Desmodur® W monomeric cycloaliphatic diisocyanate (from Bayer Material Science AG, Leverkusen, Germany) dissolved in 600 grams isopropanol. The resulting mixture was placed on a mechanical roller at room temperature for 48 hours. The solution was then coated on a siliconized polyester release liner and dried at 70°C for 10 minutes to a final pressure sensitive polyamide-based adhesive with a thickness of 25 µm (25 microns; 0.001 inch).

### Example 2

Into a reactor was charged 86 grams hydroxyl functionalized polybutadiene with a number average molecular weight of 2,800 (CAS number 69102-90-5, available from Aldrich, Milwaukee, Wisconsin) with 9.15 grams isophorone diisocyanate (0.08 equivalents). The resulting mixture was allowed to react under a dry nitrogen atmosphere for 2 hours at 80°C. Thereafter, 5.3 grams aminopropyl trimethoxysilane (0.21 equivalents) was added. The mixture was stirred for 10 minutes and then 66.7 grams of toluene was added to produce a 60% solids solution of silane terminated urethane. The solution was coated onto a liner and dried at 70°C for 15 minutes to a final pressure sensitive thickness of 48 µm (48 microns; 0.0019 inch). Due to the presence of the terminal trimethoxy silane groups, this dry polymer coating can continue to cure in the presence of moisture to yield a crosslinked polymer coating. Moisture curing can be accelerated in the presence of a catalyst such as dibutyl tin dilaurate.

### Example 3

Into a reactor was charged 150 grams of Priplast® 3192, semicrystalline polyester polyol (1020 hydroxyl equivalent weight, 0.147 equivalents, from Uniqema, New Castle, Delaware) and 27.7 grams isophorone diisocyanate (0.25 equivalents). The resulting mixture was allowed to react under a dry nitrogen atmosphere for 2 hours at 80°C. Thereafter, 22.3 grams aminopropyl trimethoxysilane (0.10 equivalents) was added. The mixture was stirred for 10 minutes and then 66.7 grams of toluene was added to produce a 75% solids solution of silane terminated urethane. The solution was coated onto a liner and dried at 70°C for 15 minutes to a final pressure sensitive thickness of 38 µm (38 microns; 0.0015 inch). Like the material of Example 2, this polymer can also be crosslinked in the presence of moisture.

**Table 1**

| **Components for Examples 4 and 5** | |
|---|---|
| **Abbreviation or Trade Designation** | **Description** |
| Additive Oil | RHODORSIL Fluid 47 V1,000 , straight-chained polydimethylsiloxane fluid of medium viscosity (1000 cps, 1.0 Pa s) commercially available from Rhodia Silicones, S.A.S., Lyon, France. |
| PDMS diamine 33,000 | approximately 33,000 number average molecular weight polydimethylsiloxane diamine prepared as described in Example 2 of U.S. Patent Number 5,461,134. |
| DYTEK A | organic diamine, commercially available from DuPont, Wilmington, DE. |
| H12MDI | Desmodur W, methylenedicyclohexylene-4,4'-diisocyanate, commercially available from Bayer, Pittsburgh, PA. |
| Primed PET | aminated-polybutadiene primed polyester film of polyethylene terephthalate having a thickness of 38 micrometers. |
| Unprimed PET | unprimed polyester film of polyethylene terephthalate having a thickness of 50 or 125 micrometers. |
| IPA | isopropyl alcohol |
| THF | tetrahydrofuran |
| PDMS diamine 14,000 | a polydimethylsiloxane diamine with a number average molecular weight of about 14,000 g/mole that was prepared as described in U.S. 5,214,119. |
| MQ Resin | a 60 weight percent solids solution of MQ silicate resin in toluene, commercially available from GE Silicones, Waterford, NY under the trade designation SR-545. |
| EDA | ethylene diamine |

### Preparative Example A: Synthesis of Silicone Polyurea (SPU) Elastomer

In a reaction vessel PDMS diamine 33,000, DYTEK A, and H12MDI were charged in a mole ratio of 1:1:2 in a sufficient amount of 2-propanol to give a 20% solids solution of the reagents. The mixture was stirred for 2 hours to give a silicone polyurea elastomer at 20% solids.

### Preparative Example B

A sample of 14K PDMS diamine (830.00 grams) was placed in a 2 liter, 3-neck resin flask equipped with a mechanical stirrer, heating mantle, nitrogen inlet tube (with stopcock), and an outlet tube. The flask was purged with nitrogen for 15 minutes and then, with vigorous stirring, diethyl oxalate (33.56 grams) was added dropwise. This reaction mixture was stirred for approximately one hour at room temperature and then for 75 minutes at 80°C. The reaction flask was fitted with a distillation adaptor and receiver. The reaction mixture was heated under vacuum (133 Pascals, 1 Torr) for 2 hours at 120°C and then for 30 minutes at 130°C, until no further distillate was able to be collected. The reaction mixture was cooled to room temperature to provide an oxamido ester terminated silicone product (i.e., the silicone diamine is terminated on both ends with monoethyl oxamide ester groups). Gas chromatographic analysis of the clear, mobile liquid showed that no detectable amount of diethyl oxalate remained. The ester equivalent weight of this precursor for preparative example C was determined by titration (equivalent weight = 8,272 grams/equivalent).

### Titration Method to Determine Equivalent Weight

Approximately 10 grams of the precursor compound of preparative example B was added to a jar. Approximately 50 grams THF solvent was added. The contents were mixed using a magnetic stir bar mix until the mixture was homogeneous. The theoretical equivalent weight of precursor was calculated and then an amount of N-hexylamine in the range of 3 to 4 times this number of equivalents was added. The reaction mixture was stirred for a minimum of 4 hours. Bromophenol blue (10-20 drops) was added and the contents were mixed until homogeneous. The mixture was titrated to a yellow endpoint with 1.0N (or 0.1N) hydrochloric acid. The number of equivalents of precursor was equal to the number of equivalents of N-hexylamine added to the sample minus the number of equivalents of hydrochloric acid added during titration. The equivalent weight (grams/equivalent) was equal to the sample weight of the precursor divided by the number of equivalents of the precursor.

### Preparative Example C

The precursor of Preparative Example B (98.13 grams) and ethylene diamine (0.36 grams) were weighed into a jar. The jar was sealed and the mixture was rapidly agitated until the contents became too viscous to flow. The jar was placed on a roller mill overnight at ambient temperature. The solid product was collected.

### Example 4

For Example 4, the silicone polyurea elastomer adhesive was prepared by blending the silicone polyurea elastomer (80 parts) from Preparative Example A with Additive Oil (20 parts) using conventional solvent means, at 20% solids in a solvent blend of IPA (120.00 parts), 30 % by weight and toluene, (280.00 parts) 70 % by weight. These samples were coated from the solvent mixture onto Primed PET and dried to 25 µm (25 micron) final thickness.

### Example 5

The copolymer of Preparative Example C (18.50 grams) was dissolved in THF (45.60 grams). MQ Resin (30.83 grams, 60.0% solids) was added to the polymer solution. The resulting mixture was mixed overnight at ambient conditions and then knife coated onto PET. The coated film was dried for about 15 minutes at ambient temperature followed by 10 minutes in a 130°C oven, to yield a 25 µm (25 micron) dry thickness coating.

Figure **5** shows the compatibility study of the adhesives of Examples 1 to 5 and a Control sample over a 28 day period as described in the test method recited above. As the data shows, all five samples exhibited 20% or less increase in resistance after 28 days exposure 60°C and 90% relative humidity (RH), well within the target of less than 20% electrical resistance change in 21 days exposure. While the Control sample showed the smallest increase in resistance as compared to the examples, in use for product devices contemplated herein, an adhesive will be required.

### Example 6

The adhesive of Example 5 (25 µm; 25 micron) was laminated to both sides of a polyolefin (ExxonMobil EXACT 8210) carrier film (3.175 mm; 125 mil) to yield a adhesive transfer tape, with a polyolefin core and silicone adhesive surfaces.

Tables 2 and 3 show the compatibility studies of the adhesives of Example 6 on nickel and aluminum vapor metallized PET films. The data show minimum corrosion of the metallic surfaces by the adhesive as indicated by comparable increase of transmittance and Delta(E).

**Table 2**

| **Transmittance measurement of metal coated PET films after exposure at 60°C/90%RH** | | | | |
|---|---|---|---|---|
| | | **Initial** | **7 days** | **20 days** |
| Aluminum Coated PET Film | No adhesive | 46.5% | 53.6% | 55.7% |
| | Example 6 | 47.6% | 50.7% | 52.5% |
| Nickel Coated PET Film | No adhesive | 44.1% | 53.2% | 62.8% |
| | Example 6 | 43.5% | 56.2% | 62.8% |

**Table 3**

| **Delta(E) measurement of metal coated PET films after exposure at 60°C/90%RH** | | | | |
|---|---|---|---|---|
| | | **Initial** | **7 days** | **20 days** |
| Aluminum Coated PET Film | No adhesive | 0.00 | 5.78 | 5.60 |
| | Example 6 | 1.91 | 6.75 | 6.46 |
| Nickel Coated PET Film | No adhesive | 0.00 | 7.34 | 4.55 |
| | Example 6 | 1.85 | 6.95 | 3.59 |

### Example 7

Two silicone adhesives, Dow Corning 7657 and Dow Corning 7658 (70/30 dry-weight ratio), were mixed with Dow Corning Syl-Off 7678 crosslinker (0.16 parts) and the Dow Corning Syl-Off 4000 catalyst. The mixed solution was dried on a fluorosilicone liner for about 15 minutes in a 130°C oven to yield a 36 µm (36 micron) dry thickness coating. The dried adhesive was then laminated to both sides of a polyolefin (ExxonMobil EXACT 8210) carrier film (2.54 mm; 100 mil) to yield an adhesive transfer tape.

Table 4 displays the surface resistance change when the adhesive of Example 7 was placed on an ITO surface. The data shows minimum ITO corrosion as indicated by the small increase in resistance.

**Table 4**

| **Surface resistance change after ITO film exposure at 60°C/90%RH** | | | |
|---|---|---|---|
| | **4 days** | **14 days** | **20 days** |
| Control- bare circuit | -1.50% | 0.95% | 1.99% |
| Example 7 | -0.60% | 2.40% | 3.22% |

## Claims

1. An article comprising a pressure sensitive adhesive or a cure-in-place adhesive having an acid number of less than 5 and selected from the group consisting of polyurea, polyamide, polyurethane, polyester, addition cure silicone and combinations thereof in contact with a corrosion sensitive layer selected from the group of metal and metal alloys, wherein when the article is conditioned for 21 days at 60°C and 90% relative humidity, the corrosion sensitive layer exhibits a change from its initial electrical resistance value of 20% or less; and wherein the acid number is defined as the amount of potassium hydroxide that is needed to neutralize the acids in one gram of polymer generally following ASTM D974; wherein the adhesive is optically clear; wherein a cure-in-place adhesive is a liquid system that can be delivered to a desired location where the adhesive components either spontaneously react with each other or do so when exposed to an energy source; wherein optically clear means that the adhesive exhibits 5% or less haze when measured on a 25 µm thick sample as described in the description.

2. The article of claim 1, wherein the corrosion sensitive layer is disposed on a first major surface of a substrate.

3. The article of claim 2, wherein the substrate is optically clear.

4. The article of claim 2, wherein the substrate is selected from the group consisting of glass and polymeric film.

5. The article of claim 2, wherein the corrosion sensitive layer covers substantially all or covers a portion of the first major surface of the substrate.

6. The article of claim 5, wherein when the corrosion sensitive layer covers a portion of the first major surface of the substrate, the layer is in a regular pattern.

7. The article of claim 1, wherein the corrosion sensitive layer is selected from the group consisting of copper, copper alloy, silver, silver alloy, indium-tin-oxide, nickel, aluminum, and antimony tin oxide.

8. The article of claim 1, wherein the corrosion sensitive layer is substantially flat.

9. The article of claim 2 comprising a plurality of alternating layers of adhesive and substrate having a corrosion sensitive layer disposed on the substrate.

10. The article of claim 2 further comprising a connector pad disposed adjacent to an edge of the substrate and connected to the corrosion sensitive layer.

11. The article of claim 2, wherein the substrate has a second major surface opposite of the first major surface, each surface having the corrosion sensitive layer disposed on at least a portion thereof and the adhesive disposed on the corrosion sensitive layer.

12. The article of claim 1, wherein the adhesive is a film having opposing first and second major surfaces and the corrosion sensitive layer is disposed on each of the first and second surfaces of the adhesive film.

13. A method of making an article comprising the steps of:
providing a substrate having a corrosion sensitive layer disposed on at least a portion thereof;
providing a tape comprising (i) a backing having opposing first and second major surfaces, (ii) a pressure sensitive adhesive or a cure-in-place adhesive having an acid number of less than 5 and selected from the group consisting of polyurea, polyamide, polyurethane, polyester, addition cure silicone and combinations thereof; wherein the adhesive is optically clear and wherein the acid number is defined as the amount of potassium hydroxide that is needed to neutralize the acids in one gram of polymer generally following ASTM D974; and
laminating the tape to the substrate such that the adhesive contacts the corrosion sensitive layer;
wherein a cure-in-place adhesive is a liquid system that can be delivered to a desired location where the adhesive components either spontaneously react with each other or do so when exposed to an energy source;
wherein optically clear means that the adhesive exhibits 5% or less haze when measured on a 25 µm thick sample as described in the description.

14. The method of claim 13, wherein the substrate is optically clear.

15. The method of claim 13, wherein the substrate is selected from the group consisting of glass and polymeric film.

16. The method of claim 13, wherein when the corrosion sensitive layer covers is in a regular pattern.

17. The method of claim 13, wherein the corrosion sensitive layer is selected from the group consisting of copper, cooper alloy, silver, silver alloy, indium-tin-oxide, nickel, aluminum, and antimony tin oxide.

18. The method of claim 13, wherein the corrosion sensitive layer is substantially flat.

19. The method of claim 13 further comprising a connector pad disposed adjacent to an edge of the substrate and in contact with the corrosion sensitive layer.

## Patentansprüche

1. Ein Gegenstand, der einen Haftkleber oder einen an Ort und Stelle härtenden Kleber mit einer Säurezahl von weniger als 5 und ausgewählt aus der Gruppe, bestehend aus Polyharnstoff, Polyamid, Polyurethan, Polyester, additionsvernetzendem Silikon und Kombinationen davon, in Kontakt mit einer korrosionsempfindlichen Schicht, ausgewählt aus der Gruppe aus Metall und Metalllegierungen, umfasst, wobei, wenn der Gegenstand 21 Tage lang bei 60 °C und 90 % relativer Feuchtigkeit konditioniert wird, die korrosionsempfindliche Schicht eine Veränderung von ihrem ursprünglichen elektrischen Widerstandswert von 20 % oder weniger aufweist; und wobei die Säurezahl als die Menge an Kaliumhydroxid definiert ist, die benötigt wird, um die Säuren in einem Gramm Polymer allgemein gemäß ASTM D974 zu neutralisieren; wobei der Kleber optisch klar ist; wobei ein an Ort und Stelle härtender Kleber ein flüssiges System ist, das an eine gewünschte Stelle abgegeben werden kann, an der die Kleberkomponenten entweder spontan miteinander reagieren oder miteinander reagieren, wenn sie einer Energiequelle ausgesetzt werden; wobei optisch klar bedeutet, dass der Kleber 5 % oder weniger Trübung aufweist, wenn an einer 25 µm dicken Probe gemessen wird, wie in der Beschreibung beschrieben.

2. Der Gegenstand nach Anspruch 1, wobei die korrosionsempfindliche Schicht auf einer ersten Hauptfläche eines Substrats angeordnet ist.

3. Der Gegenstand nach Anspruch 2, wobei das Substrat optisch klar ist.

4. Der Gegenstand nach Anspruch 2, wobei das Substrat ausgewählt ist aus der Gruppe, bestehend aus Glas und Polymerfolie.

5. Der Gegenstand nach Anspruch 2, wobei die korrosionsempfindliche Schicht im Wesentlichen die gesamte oder einen Abschnitt der ersten Hauptfläche des Substrats bedeckt.

6. Der Gegenstand nach Anspruch 5, wobei, wenn die korrosionsempfindliche Schicht einen Abschnitt der ersten Hauptfläche des Substrats abdeckt, die Schicht in einem regelmäßigen Muster vorliegt.

7. Der Gegenstand nach Anspruch 1, wobei die korrosionsempfindliche Schicht ausgewählt ist aus der Gruppe, bestehend aus Kupfer, einer Kupferlegierung, Silber, einer Silberlegierung, Indiumzinnoxid, Nickel, Aluminium und Antimonzinnoxid.

8. Der Gegenstand nach Anspruch 1, wobei die korrosionsempfindliche Schicht im Wesentlichen flach ist.

9. Der Gegenstand nach Anspruch 2, umfassend eine Vielzahl von abwechselnden Schichten aus Kleber und Substrat mit einer auf dem Substrat angeordneten korrosionsempfindlichen Schicht.

10. Der Gegenstand nach Anspruch 2, ferner umfassend eine Anschlussfläche, die benachbart zu einem Rand des Substrats angeordnet und mit der korrosionsempfindlichen Schicht verbunden ist.

11. Der Gegenstand nach Anspruch 2, wobei das Substrat eine zweite Hauptfläche gegenüber der ersten Hauptfläche aufweist, wobei auf jeder Fläche die korrosionsempfindliche Schicht auf zumindest einem Abschnitt davon angeordnet ist und der Kleber auf der korrosionsempfindlichen Schicht angeordnet ist.

12. Der Gegenstand nach Anspruch 1, wobei der Kleber eine Folie mit gegenüberliegenden ersten und zweiten Hauptflächen ist und die korrosionsempfindliche Schicht auf jeder der ersten und zweiten Fläche der Klebefolie angeordnet ist.

13. Ein Verfahren zum Herstellen eines Gegenstands, umfassend die Schritte:
Bereitstellen eines Substrats mit einer korrosionsempfindlichen Schicht, die auf zumindest einem Abschnitt davon angeordnet ist;
Bereitstellen eines Tapes, umfassend (i) einen Träger mit gegenüberliegenden ersten und zweiten Hauptflächen, (ii) einen Haftkleber oder einen an Ort und Stelle härtenden Kleber mit einer Säurezahl von weniger als 5 und ausgewählt aus der Gruppe, bestehend aus Polyharnstoff, Polyamid, Polyurethan, Polyester, additionsvernetzendem Silikon und Kombinationen davon; wobei der Kleber optisch klar ist und wobei die Säurezahl als die Menge an Kaliumhydroxid definiert ist, die benötigt wird, um die Säuren in einem Gramm Polymer allgemein gemäß ASTM D974 zu neutralisieren; und
Laminieren des Tapes auf das Substrat, so dass der Kleber die korrosionsempfindliche Schicht kontaktiert;
wobei ein an Ort und Stelle härtender Kleber ein flüssiges System ist, das an eine gewünschte Stelle abgegeben werden kann, an der die Kleberkomponenten entweder spontan miteinander reagieren oder miteinander reagieren, wenn sie einer Energiequelle ausgesetzt werden;
wobei optisch klar bedeutet, dass der Kleber 5 % oder weniger Trübung aufweist, wenn an einer 25 µm dicken Probe gemessen wird, wie in der Beschreibung beschrieben.

14. Das Verfahren nach Anspruch 13, wobei das Substrat optisch klar ist.

15. Das Verfahren nach Anspruch 13, wobei das Substrat ausgewählt ist aus der Gruppe, bestehend aus Glas und Polymerfolie.

16. Das Verfahren nach Anspruch 13, wobei die korrosionsempfindliche Schicht, wenn sie abdeckt, in einem regelmäßigen Muster vorliegt.

17. Das Verfahren nach Anspruch 13, wobei die korrosionsempfindliche Schicht ausgewählt ist aus der Gruppe, bestehend aus Kupfer, Kupferlegierung, Silber, Silberlegierung, Indiumzinnoxid, Nickel, Aluminium und Antimonzinnoxid.

18. Das Verfahren nach Anspruch 13, wobei die korrosionsempfindliche Schicht im Wesentlichen flach ist.

19. Das Verfahren nach Anspruch 13, ferner umfassend eine Anschlussfläche, die angrenzend an einen Rand des Substrats und in Kontakt mit der korrosionsempfindlichen Schicht angeordnet ist.

## Revendications

1. Article comprenant un adhésif sensible à la pression ou un adhésif durcissable sur place ayant un indice d'acide inférieur à 5 et choisi dans le groupe constitué de polyurée, polyamide, polyuréthane, polyester, silicone durcissable par addition et des combinaisons de ceux-ci en contact avec une couche sensible à la corrosion choisie dans le groupe de métal et alliages métalliques, dans lequel lorsque l'article est conditionné pendant 21 jours à 60 °C et 90 % d'humidité relative, la couche sensible à la corrosion présente un changement par rapport à sa valeur initiale de résistance électrique de 20 % ou moins ; et dans lequel l'indice d'acide est défini comme la quantité d'hydroxyde de potassium qui est nécessaire pour neutraliser les acides dans un gramme de polymère généralement en suivant ASTM D974 ; dans lequel l'adhésif est optiquement transparent ; dans lequel un adhésif durcissable sur place est un système liquide qui peut être libéré à un emplacement souhaité où les composants adhésifs soit réagissent spontanément les uns avec les autres soit le font lorsqu'ils sont exposés à une source d'énergie ; dans lequel optiquement transparent signifie que l'adhésif présente 5 % de trouble ou moins lorsqu'on mesure sur un échantillon de 25 µm d'épaisseur tel que décrit dans la description.

2. Article selon la revendication 1, dans lequel la couche sensible à la corrosion est disposée sur une première surface principale d'un substrat.

3. Article selon la revendication 2, dans lequel le substrat est optiquement transparent.

4. Article selon la revendication 2, dans lequel le substrat est choisi dans le groupe constitué de verre et film polymère.

5. Article selon la revendication 2, dans lequel la couche sensible à la corrosion couvre essentiellement la totalité ou couvre une partie de la première surface principale du substrat.

6. Article selon la revendication 5, dans lequel lorsque la couche sensible à la corrosion couvre une partie de la première surface principale du substrat, la couche est dans un motif régulier.

7. Article selon la revendication 1, dans lequel la couche sensible à la corrosion est choisie dans le groupe constitué de cuivre, alliage de cuivre, argent, alliage d'argent, oxyde d'indium et d'étain, nickel, aluminium, et oxyde d'antimoine et d'étain.

8. Article selon la revendication 1, dans lequel la couche sensible à la corrosion est essentiellement plate.

9. Article selon la revendication 2 comprenant une pluralité de couches alternées d'adhésif et de substrat ayant une couche sensible à la corrosion disposée sur le substrat.

10. Article selon la revendication 2 comprenant en outre un plot de connecteur disposé adjacent à un bord du substrat et connecté à la couche sensible à la corrosion.

11. Article selon la revendication 2, dans lequel le substrat a une deuxième surface principale opposée à la première surface principale, chaque surface ayant la couche sensible à la corrosion disposée sur au moins une partie de celle-ci et l'adhésif disposé sur la couche sensible à la corrosion.

12. Article selon la revendication 1, dans lequel l'adhésif est un film ayant des première et deuxième surfaces principales opposées et la couche sensible à la corrosion est disposée sur chacune des première et deuxième surfaces du film adhésif.

13. Procédé de fabrication d'un article comprenant les étapes consistant à :
fournir un substrat ayant une couche sensible à la corrosion disposée sur au moins une partie de celui-ci ;
fournir un ruban comprenant (i) un support ayant des première et deuxième surfaces principales opposées, (ii) un adhésif sensible à la pression ou un adhésif durcissable sur place ayant un indice d'acide inférieur à 5 et choisi dans le groupe constitué de polyurée, polyamide, polyuréthane, polyester, silicone durcissable par addition et des combinaisons de ceux-ci ; dans lequel l'adhésif est optiquement transparent et dans lequel l'indice d'acide est défini comme la quantité d'hydroxyde de potassium qui est nécessaire pour neutraliser les acides dans un gramme de polymère généralement en suivant ASTM D974 ; et
stratifier le ruban au substrat de telle sorte que l'adhésif vient en contact avec la couche sensible à la corrosion ;
dans lequel un adhésif durcissable sur place est un système liquide qui peut être libéré à un emplacement souhaité où les composants adhésifs soit réagissent spontanément les uns avec les autres soit le font lorsqu'ils sont exposés à une source d'énergie ;
dans lequel optiquement transparent signifie que l'adhésif présente 5 % de trouble ou moins lorsqu'on mesure sur un échantillon de 25 µm d'épaisseur tel que décrit dans la description.

14. Procédé selon la revendication 13, dans lequel le substrat est optiquement transparent.

15. Procédé selon la revendication 13, dans lequel le substrat est choisi dans le groupe constitué de verre et film polymère.

16. Procédé selon la revendication 13, dans lequel lorsque la couche sensible à la corrosion couvre est dans un motif régulier.

17. Procédé selon la revendication 13, dans lequel la couche sensible à la corrosion est choisie dans le groupe constitué de cuivre, alliage de cuivre, argent, alliage d'argent, oxyde d'indium et d'étain, nickel, aluminium, et oxyde d'antimoine et d'étain.

18. Procédé selon la revendication 13, dans lequel la couche sensible à la corrosion est essentiellement plate.

19. Procédé selon la revendication 13 comprenant en outre un plot de connecteur disposé adjacent à un bord du substrat et en contact avec la couche sensible à la corrosion.
